Europäisches Patentamt

European Patent Office

Office européen des brevets

(19)

(11) **EP 0 529 127 B1**

(12) **EUROPÄISCHE PATENTSCHRIFT**

(45) Veröffentlichungstag und Bekanntmachung des
Hinweises auf die Patenterteilung:
**23.10.1996  Patentblatt 1996/43**

(51) Int Cl.⁶: **H04L 12/56**, H04L 12/26

(21) Anmeldenummer: **91114393.1**

(22) Anmeldetag: **27.08.1991**

(54) **Anordnung zur Bitratenüberwachung in ATM-Netzen**

Circuit for monitoring the bit rate in ATM-networks

Circuit de surveillance de débit binaire dans des réseaux ATM

(84) Benannte Vertragsstaaten:
**AT BE CH DE FR GB IT LI NL SE**

(43) Veröffentlichungstag der Anmeldung:
**03.03.1993  Patentblatt 1993/09**

(73) Patentinhaber: **SIEMENS
AKTIENGESELLSCHAFT
80333 München (DE)**

(72) Erfinder: **Kammerl, Anton, Dr.
W-8038 Gröbenzell (DE)**

(56) Entgegenhaltungen:
- **INTERNATIONAL JOURNAL OF DIGITAL AND
ANALOG COMMUNICATION SYSTEMS Bd. 3,
1990, Seiten 187 - 197; G.NIESTEGGE: 'THE
'LEAKY BUCKET' POLICING METHOD IN THE
ATM (ASYNCHRONOUS TRANSFER MODE)
NETWORK'**
- **INTERNATIONAL SWITCHING SYMPOSIUM
1990 Bd. 5, Mai 1990, STOCKHOLM SE Seiten 127
- 130; E.P.RATHGEB ET AL.: 'THE POLICING
FUNCTION IN ATM NETWORKS'**

**Beschreibung**

In neueren Enwicklungen der Fernmeldetechnik - und hier in der Entwicklung diensteintegrierender Breitbandnetze (B-ISDN) - spielt der auf asynchroner Zeitmultiplextechnik basierende Asynchrone Transfer-Modus (ATM) eine wesentliche Rolle, demzufolge die Signalübertragung in einem Bitstrom vor sich geht, der den - jeweils aus Kopf und Nutzinformationsteil bestehende - Zellen konstanter Länge von z.B. 53 Oktetts unterteilt ist, die je nach Bedarf mit paketierten Nachrichten belegt werden; ist gerade keine Nutzinformation zu übermitteln, so werden spezielle Leerzellen übertragen. In ATM-Vermittlungsstellen werden virtuelle Verbindungen aufgebaut, d.h. Verbindungen, die nur dann einen Wegeabschnitt tatsächlich benutzen, wenn über diesen tatsächlich ein Nachrichtenpaket (Block) zu übermitteln ist, wobei jedes Paket in seinem Kopf u.a. eine z.B. 2 Oktetts umfassende Adresse zur eindeutigen Zuordnung des Pakets zu einer bestimmten virtuellen Verbindung enthält. Dabei kann jedes Paket am Eingang zur Koppelanordnung nach Maßgabe der jeweiligen Wahlinformation die komplette Information für seinen Weg durch die Koppelanordnung erhalten; mit Hilfe dieser Information schalten die Koppelelemente dann das Paket auf dem festgelegten Weg selbst durch (self-routing network) (siehe z.B. telcom report 11(1985)6, 210...213).

Ein ATM-Netz bietet dem Teilnehmer eine sehr hohe maximale Bitrate $r_{max}$ von z.B. 150 Mbit/s, wobei jedoch, abhängig vom jeweiligen ATM-Dienst, vom Teilnehmer vielfach nur ein Teil der angebotenen Bitrate genutzt werden wird, und zwar

- in sog. CBR(Constant Bit Rate)-Verbindungen in Form der konstanten Bitrate $r_c$ (von z.B. 2 Mbit/s),
- in sog. VBR(Variable Bit Rate)-Verbindungen in Form der Durchschnitts-(average-)Bitrate $r_a$ (von z.B. 5 Mbit/s) und der Spitzen-(peak-)Bitrate $r_p$ (von z.B. 30 Mbit/s).

Beim Verbindungsaufbau werden die jeweils gewünschten Verkehrsparameter ausgehandelt und ggf. festgelegt; in einer Verbindungsannahmesteuereinrichtung wird dabei entschieden, ob die augenblicklich verfügbare Netzkapazität ausreicht, eine gewünschte virtuelle Verbindung herzustellen.
Nach der Herstellung der virtuellen Verbindung werden die ausgehandelten Verkehrsparameter in einer Bitratenüberwachungseinrichtung (Policing Unit) kontrolliert. Wird der ausgehandelte Wert überschritten, so werden die überschießenden ATM-Zellen eliminiert; es ist aber auch möglich, die überschießenden ATM-Zellen zu markieren, so daß sie im Netz noch nachträglich, falls es zu Verkehrsstauungen kommt, als ATM-Zellen niedriger Priorität eliminiert werden können.
Die Bitratenüberwachung geschieht üblicherweise nach dem sog. Leaky-Bucket-Prinzip (siehe z.B. Niestegge: The "Leaky Bucket" Policing Method in the ATM (Asynchronous Transfer Mode) Network, INTERNATIONAL JOURNAL OF DIGITAL AND ANALOG COMMUNICATION SYSTEMS, VOL.3 (1990), 187...197):
Bei jedem Empfang einer ATM-Zelle wird der Stand eines Zählers um eine Stelle erhöht (inkrementiert), und abhängig von den ausgehandelten Verkehrsparametern wird der Zählerstand in bestimmten Abständen T um d Stellen vermindert (dekrementiert). Dabei wird weder der Zählerstand O unterschritten noch wird eine Zählerstandsschwelle S überschritten; bei Erreichen der Schwelle werden die überschießenden ATM-Zellen eliminiert bzw. markiert.
Hält sich der Teilnehmer an die ausgehandelte Bitrate $r = B_z \cdot d/T$, worin $B_z$ die Anzahl der (Nutzsignal-)Bits je ATM-Zelle, d der Dekrementierungswert und T die Dekrementierungsperiode ist, so wird der Zähler durch das Dekrementieren immer wieder auf den Zählerstand O gebracht; überschreitet der Teilnehmer die festgelegte Bitrate r, so wird trotz der Dekrementierung sehr schnell der Ansprechschwellwert S erreicht.
Bis zum Erreichen des Ansprechschwellwerts S läßt die LeakyBucket-Methode ein kurzzeitiges Überschreiten der vereinbarten Bitrate zu: So werden, ausgehend vom Zählerstand 0, zunächst S ATM-Zellen in ununterbrochener Folge (d.h. ohne Leerzellen oder zu anderen Verbindungen gehörende Zellen) von der Leaky-Bucket-Einheit durchgelassen, bis der Ansprechschwellwert S des Zählers erreicht ist. Wenn unmittelbar vor diesem Erreichen der Zählerstand um einen Wert d dekrementiert wird, so können weitere d ATM-Zellen passieren; wenn der Zählerstand bis zum Erreichen des Ansprechschschwellwerts S mehrmals dekrementiert worden ist, erhöht sich die Anzahl durchgelassener ATM-Zellen entsprechend weiter.
Die maximal mögliche Anzahl von ATM-Zellen in einem sog. full-rate-burst, bei dem die maximale Bitrate von z.B. 150 Mbit/s auftritt, ist dann $n_{max} = S + k \cdot d$ mit $k = 1 + ⌈ T \cdot (S-d)/((T/t_z)-d) ⌉$, worin $t_z$ die Dauer einer ATM-Zelle bei der maximalen Übertragungsgeschwindigkeit ist und ⌈...⌉ bedeutet, daß von dem in ⌈...⌉ stehenden Ausdruck nur der ganzzahlige Anteil relevant ist.
Eine Aufgabe der Bitratenüberwachung ist es, die Länge solcher full-rate-bursts zu begrenzen, weil full-rate-bursts die Wahrscheinlichkeit eines Pufferüberlaufs im ATM-Netzwerk erhöhen. Aus diesem Grunde sollte der Ansprechschwellwert S so klein wie möglich sein.
Bei zu kleinem Ansprechschwellwert könnte es andererseits aber vorkommen, daß Teilnehmern, die sich bezüglich der angemeldeten Bitrate wohlverhalten, ungerechtfertigterweise trotzdem ATM-Zellen eliminiert werden, und zwar bedingt durch Wartezeitjitter, d.h. durch in Warteschlangen entstehende variable Verzögerungen.

EP 0 529 127 B1

Im Anschlußbereich sei beispielsweise eine variable Verzögerung $\delta$ von z.B. 0,2 ms zugelassen, wobei die Überschreitungswahrscheinlichkeit $10^{-10}$ sein darf. Daraus folgt, daß nach Auftreten dieser Verzögerung der Leacky-Bucket-Zähler den Ansprechschwellwert S noch nicht erreicht haben darf. Der gerade noch zulässige Zählerstand $n = S - 1$ ergibt sich aus den im Zeitabschnitt $\delta + T$ in der Leaky-Bucket-Einheit empfangenen ATM-Zellen, deren Anzahl $= d + \delta \cdot r/B_z$ ist; hierbei wird davon ausgegangen, daß während der Verzögerungszeitspanne $\delta$ der Zählerstand auf $n = 0$ dekrementiert wurde und daß (im ungünstigsten Fall) unmittelbar vor Eintreffen des verzögerten ATM-Zellen-Bündels ein Dekrementiervorgang stattfindet. Damit gilt dann $S = 1 + d + T\delta \cdot r/B_z \bot$ (siehe auch Niestegge, a.a.O., G1.(6)). Wird S so festgelegt, so bleibt die Wahrscheinlichkeit für ein ungerechtfertigtes Eliminieren von ATM-Zellen unter dem Wert $10^{-10}$. Beispiele für Parameterwerte r, T, $\delta$, S, $n_{max}$ finden sich beispielsweise bei Niestegge, a.a.O., Tabellen I und II.

Über das im vorstehenden umrissene einfache Leaky-Bucket-Verfahren hinausgehend werden z.Zt. Policing-Methoden bevorzugt, die von einem sog. Dual-Leaky-Bucket-Prinzip Gebrauch machen. Dazu ist eine Kette von zwei Leaky-Bucket-Einheiten vorgesehen, wobei mittels der ersten Leaky-Bucket-Einheit die Spitzenbitrate $r_p = B_z \cdot d_1/T_1$ (mit $B_z$ = Anzahl der Bits je ATM-Zelle, $d_1$ = Dekrementierungswert und $T_1$ = Dekrementierungsperiode der ersten Leaky-Bucket-Einheit) überwacht und die bis zum Ansprechen der ersten Leaky-Bucket-Einheit maximal mögliche Anzahl $n_{max} = S_1 + k \cdot d_1$ (mit $k = 1 + T(S_1 - d_1)/((T_1/t_z) - d_1) \bot$, $S_1$ = Ansprechschwellwert der ersten Leaky-Bucket-Einheit, $t_z$ = Dauer einer ATM-Zelle bei maximaler Übertragungsgeschwindigkeit) von ATM-Zellen in einem sog. full-rate-burst festgelegt wird;
mittels einer zweiten Leaky-Bucket-Einheit wird die mittlere Bitrate $r_a = B_z \cdot d_2/T_2$ (mit $d_2$ = Dekrementierungswert und $T_2$ = Dekrementierungsperiode der zweiten Leaky-Bucket-Einheit) überwacht, und es wird die maximale Dauer $t_{max} \approx S_2 \cdot B_z/(r_p - r_a)$ eines Bursts mit der Spitzenbitrate $r_p$ (peak-rate-burst) (mit $S_2$ = Ansprechschwellwert der zweiten Leaky-Bucket-Einheit) festgelegt (Niestegge, a.a.O., Kap. 4.2).

Für diese Aufgaben muß die zweite Leaky-Bucket-Einheit träge reagieren bzw. mit einem sehr hohen Schwellwert $S_2$ arbeiten; ist ein Dienst beispielsweise definiert mit $r_a = 2$ Mbit/s, $r_p = 10$ Mbit/s und $t_{max} = 2$ s, so ergibt sich (bei $B_z = 48 \cdot 8 = 384$) für $S_2$ ein Wert von etwa 40000. Dabei wird eine unerlaubte Erhöhung der Durchschnittsbitrate $r_a$ auf z. B. 2,5 oder 3 oder 4 oder 6 Mbit/s erst sehr spät, im Beispiel nach 32 bzw. 16 bzw. 8 bzw. 4 s erkannt, wobei etwa 40000 ATM-Zellen zuviel übertragen werden.

Nachteilig ist andererseits ein relativ häufiges ungerechtfertigtes Eliminieren bzw. Markieren von ATM-Zellen bei der $t_{max}$-Überwachung: Hält sich die Bitrate vor einer Bitratenspitze längere Zeit bei dem festgelegten Wert $r_a$ für die mittlere Bitrate, so wird der Zähler der zweiten Leaky-Bucket-Einheit durch das Dekrementieren etwa auf dem Zählerstand O gehalten. Während einer Bitratenspitze von z.B . $r_p = 5 \cdot r_a$, die etwa für die Zeitspanne $t_{max}$ andauert, werde die Ansprechschwelle $S_2$ gerade noch nicht erreicht; wenn dann danach für einige Zeit keine ATM-Zellen ankommen, wird der Zähler (in einer Zeitspanne von etwa $5 \cdot t_{max}$) auf den Zählerstand 0 dekrementiert sein. Tritt jedoch während dieser Zeit (im Mittel bei $2,5 \, t_{max}$) erneut eine (erlaubte) Bitratenspitze ein, so startet der Zähler (im Mittel bei einem Zählerstand $S_2/2$) erneut und erreicht dann sehr schnell, im Mittel bereits nach einer Zeitspanne $t_{max}/2$; die Ansprechschwelle $S_2$ mit der Folge, daß $S_2/2$ (d.h. einige tausend) ATM-Zellen ungerechtfertigterweise eliminiert bzw. markiert werden; noch ungünstiger wird die Situation, wenn mehr als zwei Bitratenspitzen kurzzeitig aufeinanderfolgen.

Die Erfindung zeigt nun einen Weg, die im vorstehenden angeführten Nachteile zu vermeiden.

Die Erfindung betrifft eine Anordnung zur Bitratenüberwachung in ATM-Netzen in einem sog. Dual-Leaky-Bucket-Verfahren, demzufolge
mittels einer ersten Leaky-Bucket-Einheit die konstante Bitrate $r_c$ oder die Spitzenbitrate $r_p = B_z \cdot d_1/T_1$ (mit $B_z$ = Anzahl der Bits je ATM- Zelle, $d_1$ = Dekrementierungswert und $T_1$ = Dekrementierungsperiode der ersten Leaky-Bucket-Schaltung) überwacht und die bis zum Ansprechen der ersten Leaky-Bucket-Einheit maximal mögliche Anzahl $n_{max} = S_1 + kd_1$ (mit $k = 1 + T(S_1 - d_1)/((T_1/t_z) - d_1) \bot$, $S_1$ = Ansprechschwellwert der ersten Leaky-Bucket-Einheit, $t_z$ = Dauer einer ATM-Zelle bei maximaler Übertragungsgeschwindigkeit) von ATM-Zellen in einem sog. full-rate-burst festgelegt wird bzw.
mittels einer zweiten Leaky-Bucket-Einheit die mittlere Bitrate $r_a = B_z \, d_2/T_2$ (mit $d_2$ = Dekrementierungswert und $T_2$ = Dekrementierungsperiode der zweiten Leaky-Bucket-Einheit) überwacht und die maximale Dauer $t_{max} \approx S_2 \cdot B_z/(r_p - r_a)$ eines peak-rate-bursts (mit $S_2$ = Ansprechschwellwert der zweiten Leaky-Bucket-Einheit) festgelegt wird; diese Anordnung ist erfindungsgemäß dadurch gekennzeichnet,
daß in der zweiten Leaky-Bucket-Einheit bei dem mit den in der zweiten Leaky-Bucket-Einheit ankommenden ATM-Zellen inkrementierten und mit der Dekrementierungsperiode $T_2$ jeweils um den Dekrementierungswert $d_2$ dekrementierten, den Ansprechschwellwert $S_2$ aufweisenden Zähler ein kurz vor dem Ansprechschwellwert liegender Rücksetzschwellwert wirksam ist, bei dessen Unterschreiten der Zähler auf den Zählerstand 0 rückgesetzt wird, und daß neben diesem ersten Zähler ein in seinem Zählerstand mit den in der zweiten Leaky-Bucket-Einheit ankommenden ATM-Zellen inkrementierter und mit einer füllungsgradabhängigen Zellentaktrate jeweils um einen Zählschritt dekrementierter zusätzlicher Zähler vorgesehen ist, mit dessen Dekrementierung zugleich ein ebenfalls mit der Dekrementierungsperiode $T_2$ jeweils um den Dekrementierungswert $d_2$ dekrementierter weiterer Zähler inkrementiert wird, der einen

3

kleineren Ansprechschwellwert $S_2^* < S_2$ als der erste Zähler aufweist, dessen Erreichen ebenso wie das Erreichen des Ansprechschwellwerts des ersten Zählers zu einer Eliminierung bzw. Markierung der überschießenden ATM-Zellen führt.

Die Erfindung bringt den Vorteil mit sich, in der zweiten Leaky-Bucket-Einheit sowohl mit einem hohen Ansprechschwellwert $S_2$ einer entsprechend hohen zulässigen Dauer $t_{max}$ von peak-rate-bursts ohne ungerechtfertigte Eliminierung bzw. Markierung von ATM-Zellen dicht aufeinanderfolgender peak-rate-bursts Rechnung tragen zu können als auch unzulässige Überschreitungen der festgelegten mittleren Bitrate $r_a$ noch relativ schnell feststellen und eine Übertragung überschießender ATM-Zellen vermeiden zu können.

Der maximale Zählerstand $Z_{Rmax}$ des zusätzlichen Zählers kann in weiterer Ausgestaltung der Erfindung verbindungsindividuell nach Maßgabe der für die jeweilige Verbindung vorgegebenen Parameter festgelegt werden, insbesondere proportional zum Ansprechschwellwert $S_2$ des ersten Zählers und zum Verhältnis $r_p/r_a$ der Spitzenbitrate $r_p$ zu der mittleren Bitrate $r_a$.

Die Zellentaktrate kann in weiterer Ausgestaltung der Erfindung bei kleinem Verhältnis $z_R/z_{Rmax}$ von Zählerstand zu maximalem Zählerstand des zusätzlichen Zählers der bei der mittleren Bitrate $r_a$ gegebenen Zellenrate entsprechen. In weiterer Ausgestaltung der Erfindung kann die Zellentaktrate bei zunehmendem Verhältnis von Zählerstand zu maximalem Zählerstand des zusätzlichen Zählers über den Wert der bei der mittleren Bitrate $r_a$ gegebenen Zellenrate angehoben werden, ggf. so weit, bis bei Erreichen des (verbindungsindividuell eingestellten) maximalen Zählerstands $Z_{Rmax}$ die Zellentaktrate der bei der Spitzenbitrate $r_p$ gegebenen Zellenrate entspricht.

Um einem Teilnehmer die Nichteinhaltung festgelegter Verbindungsparameter zu erschweren, kann in weiterer Ausgestaltung der Erfindung bei einem wiederholten Unterschreiten des bei dem ersten Zähler wirksamen Rücksetzschwellwertes der Zähler auf einen höheren Zählerstand rückgesetzt werden; bei mehrfach wiederholtem Unterschreiten des Rücksetzschwellwertes kann der Zähler auch auf jeweils zunehmend höhere Zählerstände rückgesetzt werden.

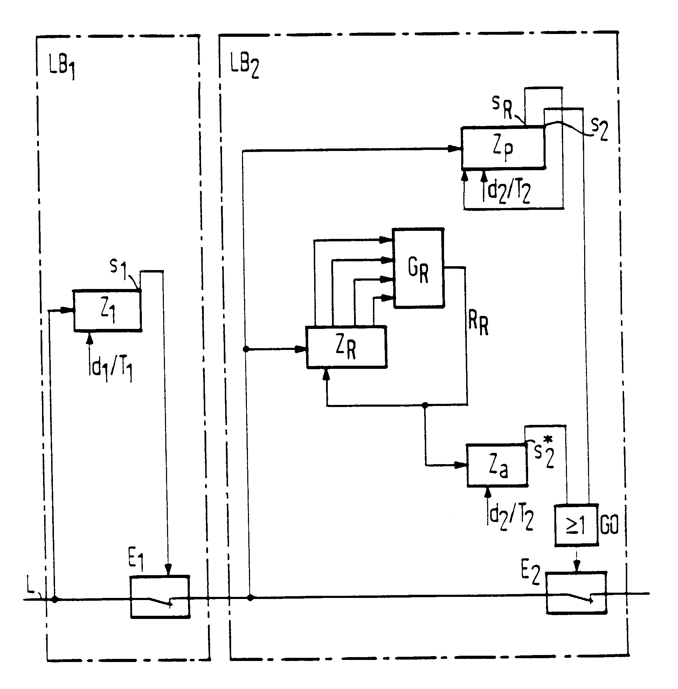

Anhand der Zeichnung sei die Erfindung noch näher erläutert.

Die Zeichnung zeigt schematisch in einem zum Verständnis der Erfindung erforderlichen Umfang eine Policing-Anordnung mit einer Kette von zwei Leaky-Bucket-Einheiten $LB_1$, $LB_2$, die bei Überschreitung festgelegter Parameter eine Eliminierung überschießender ATM-Zellen mit Hilfe zweier entsprechender Eliminierungseinrichtungen $E_1$, $E_2$ bewirken, die in der Zeichnung als in eine die ATM-Zellen führende Leitung L eingefügte Schalter dargestellt sind.

Mittels der ersten Leaky-Bucket-Einheit $LB_1$ möge dabei die Spitzenbitrate $r_p = B_z \cdot d_1/T_1$ (mit $B_z$ = Anzahl der Bits je ATM-Zelle, $d_1$ = Dekrementierungswert und $T_1$ = Dekrementierungsperiode der ersten Leaky-Bucket-Einheit) überwacht und die bis zum Ansprechen der ersten Leaky-Bucket-Einheit maximal mögliche Anzahl $n_{max} = S_1 + k \cdot d_1$ (mit $k = 1 + T(S_1 - d_1)/((T_1/t_z) \cdot d_1) \perp$, $S_1$ = Ansprechschwellwert der ersten Leaky-Bucket-Einheit, $t_z$ = Dauer der ATM-Zelle bei maximaler Übertragungsgeschwindigkeit) von ATM-Zellen in einem sog. full-rate-burst festgelegt werden. Hierzu ist in der Zeichnung angedeutet, daß die erste Leaky-Bucket-Einheit $LB_1$ einen Zähler $Z_1$ aufweist, der in seinem Zählerstand durch die auf der Zellenleitung L erscheinenden ATM-Zellen inkrementiert und von einem Dekrementierungseingang $d_1/t_1$ her mit einer Dekrementierungsperiode $T_1$ wiederholt jeweils um einen Dekrementierungswert $d_1$ dekrementiert wird. Bei Erreichen eines Ansprechschwellwert $S_1$ gibt der Zähler $Z_1$ von einem entsprechenden Ausgang $s_1$ her einen Eliminierungsbefehl an die Eliminierungseinrichtung $E_1$ ab.

Mittels der zweiten Leaky-Bucket-Einheit wird die mittlere Bitrate $r_a = B_z \cdot d_2/T_2$ (mit $d_2$ = Dekrementierungswert und $T_2$ = Dekrementierungsperiode der zweiten Leaky-Bucket-Einheit) überwacht, und es wird die maximale Dauer $t_{max} \approx S_2 \cdot B_z/(r_p - r_a)$ eines (sog. peak-rate-)Bursts mit der Spitzenbitrate $r_p$ (mit $S_2$ = Ansprechschwellwert der zweiten Leaky-Bucket-Einheit) festgelegt. Hierzu ist in der Zeichnung angedeutet, daß die zweite Leaky-Bucket-Einheit $LB_2$ einen Zähler $Z_p$ aufweist, der in seinem Zählerstand durch die auf der Zellenleitung L nach Passieren der Leaky-Bucket-Einheit $LB_1$ noch erscheinenden ATM-Zellen inkrementiert und von einem Dekrementierungseingang $d_2/t_2$ her mit einer Dekrementierungsperiode $T_2$ wiederholt jeweils um einen Dekrementierungswert $d_2$ dekrementiert wird. Bei Erreichen eines Ansprechschwellwerts $S_2$ gibt der Zähler $Z_p$ von einem entsprechenden Ausgang $s_2$ her einen Eliminierungsbefehl an die Eliminierungseinrichtung $E_2$ ab.

Wie in der Zeichnung weiter angedeutet ist, ist beim Zähler $Z_p$ ein kurz vor dem Ansprechschwellwert $S_2$ liegender Rücksetzschwellwert $S_R$ wirksam, bei dessen Unterschreiten der Zähler $Z_P$ von einem entsprechenden Ausgang $s_R$ her auf den Zählerstand 0 rückgesetzt wird. Es ist auch möglich, daß bei einem wiederholten Unterschreiten des beim Zähler $Z_p$ wirksamen Rücksetzschwellwerts $S_R$ der Zähler $Z_p$ nicht auf den Zählerstand 0, sondern lediglich auf einen höheren Zählerstand rückgesetzt wird, wobei bei mehrfach wiederholtem Unterschreiten des Rücksetzschwellwertes $S_R$ der Zähler $Z_p$ auch auf jeweils zunehmend höhere Zählerstände rückgesetzt werden kann. Ohne daß dies in der Zeichnung noch näher dargestellt ist, kann dazu der Rücksetzschwellwert-Ausgang $s_R$ des Zählers $Z_p$ über eine vom Ausgang $s_R$ her gesteuerte Schrittschalteinrichtung auch zu entsprechenden zusätzlichen Rücksetzeingängen des Zählers $Z_p$ führen. Mit Hilfe des Zählers $Z_p$ wird in der zweiten Leaky-Bucket-Einheit $LB_2$ in der oben angegebenen Weise die maximale Dauer $t_{max}$ von peak-rate-bursts überwacht.

Zur Überwachung der mittleren Bitrate $r_a$ ist in der zweiten Leaky-Bucket-Einheit $LB_2$ neben diesem ersten Zähler $Z_p$ ein weiterer Zähler $Z_a$ vorgesehen, der einen kleineren Ansprechschwellwert $S_2^*$ als der erste Zähler $Z_p$ aufweist;

bei Erreichen dieses kleineren Ansprechschwellwerts $S_2^*$ kommt es ebenso wie beim Erreichen des Ansprechschwellwerts $S_2$ des ersten Zählers $Z_p$ zu einer Eliminierung bzw. Markierung der überschießenden ATM-Zellen. In der Zeichnung ist dazu angedeutet, daß die entsprechenden Zählerausgänge $s_2$ (beim ersten Zähler Zp) und $s_2^*$ (beim weiteren Zähler Za) über ein ODER-Glied GO zum Steuereingang der Eliminierungseinrichtung $E_2$ führen.

Wie aus der Zeichnung weiter ersichtlich ist, wird auch der weitere Zähler $Z_a$ von einem entsprechenden Dekrementierungseingang $d_2/T_2$ her mit der Dekrementierungsperiode $T_2$ wiederholt jeweils um den Dekrementierungswert $d_2$ dekrementiert. In seinem Zählerstand inkrementiert wird der weitere Zähler $Z_a$ in Abhängigkeit von den in der zweiten Leaky-Bucket-Einheit $LB_2$ ankommenden ATM-Zellen in der im folgenden beschriebenen Weise:

Der erwähnte kleinere Ansprechschwellwert $S_2^*$ des weiteren Zählers $Z_a$ gestattet es, eine unerlaubte Erhöhung der Durchschnittsbitrate $r_a$ bereits entsprechend früh zu erkennnen. Dabei werden nun, um ein ungerechtfertigt frühes Erreichen des kleineren Ansprechschwellwerts $S_2^*$ zu vermeiden, diejenigen ATM-Zellen, die in der weiteren Leaky-Bucket-Einheit $LB_2$ ankommen, nicht unmittelbar zur Inkrementierung des weiteren Zählers $Z_a$ benutzt; vielmehr ist noch ein zusätzlicher Zähler $Z_R$ vorgesehen, der von den in der zweiten Leaky-Bucket-Einheit $LB_2$ ankommenden ATM-Zellen in seinem Zählerstand inkrementiert wird.

Jeweils um einen Zählschritt dekrementiert wird dieser zusatzliche Zähler $Z_R$ mit einer von dessen Füllungsgrad, d.h. von dem Zählerstand bezogen auf den maximalen Zählerstand, abhängigen Zellentaktrate $R_R$; zugleich mit jeder solchen Dekrementierung des zusätzlichen Zählers $Z_R$ wird der zuvor erwähnte weitere Zähler $Z_a$ ebenfalls um einen Zählschritt inkrementiert. Der maximale Zählerstand $z_{Rmax}$ des zusätzlichen Zählers $Z_R$ wird verbindungsindividuell nach Maßgabe der für die jeweilige Verbindung vorgegebenen Parameter festgelegt, etwa proportional zum Ansprechschwellwert $S_2$ des ersten Zählers $Z_p$ und zum Verhältnis $r_p/r_a$ der Spitzenbitrate $r_p$ zu der mittleren Bitrate $r_a$. So kann man z.B. bei einem Bitratenverhältnis $r_p/r_a = 5$ den maximalen Zählerstand $Z_{Rmax} = 5\,S_2$ setzen.

Die Zellentaktrate $R_R$ kann mit steigendem Füllungsgrad des zusätzlichen Zählers $Z_R$ zunehmen, beispielsweise etwa in der aus der nachstehenden Tabelle ersichtlichen Weise:

$$
\begin{array}{l|c|c|c|c|c|}
z_R/z_{Rmax} = & 0...1/10 & 1/10...1/2 & 1/2...3/4 & 3/4...9/10 & 9/10...1 \\
R_R = & r_a/B_z & 1{,}2 \cdot r_a/B_z & 1{,}4 \cdot r_a/B_z & 1{,}6 \cdot r_a/B_z & r_p/B_z
\end{array} .
$$

Allgemeiner gesprochen wird also die Zellentaktrate $R_R$ bei zunehmendem Verhältnis $z_R/z_{Rmax}$ von Zählerstand zu maximalem Zählerstand des zusätzlichen Zählers über den Wert der bei der mittleren Bitrate $r_a$ gegebenen Zellenrate schrittweise angehoben, bis schliesslich bei Erreichen des (verbindungsindividuell eingestellten) maximalen Zählerstands $z_{Rmax}$ (bzw. schon kurz davor) die Zellentaktrate der bei der Spitzenbitrate $r_p$ gegebenen Zellenrate entspricht.

In der Zeichnung ist dazu angedeutet, daß der jeweilige Füllungsgrad des zusätzlichen Zählers $Z_R$ einem Zellentakt-Geber $G_R$ signalisiert wird, der daraufhin einen entsprechenden Zellentakt über die Leitung $R_R$ an den Dekrementierungseingang des zusätzlichen Zählers $Z_R$ und an den Inkrementierungseingang des zuvor erwähnten weiteren Zählers $Z_a$ abgibt. Der Zellentakt-Geber $G_R$ kann dazu, ohne daß dies in der Zeichnung noch im einzelnen dargestellt ist, entsprechende Zellentakt-Generatoren aufweisen, die in Abhängigkeit vom jeweiligen Zählerfüllungsgrad entriegelt werden.

Der Ansprechschwellwert $S_2^*$ des zuvor erwähnten weiteren Zählers $Z_a$ kann zum Beispiel so festgelegt werden, daß er bei einer Bitrate von etwa $1{,}6 \cdot r_a$ nach $4 \cdot t_{max}$ erreicht wird; bei $t_{max} = 2$ s und $r_a = 2$ Mbit/s ist dies bei $S_2^* = 25000$ der Fall.

Abschliessend sei noch bemerkt, daß in dem in der Zeichnung dargestellten Ausführungsbeispiel in der zweiten Leaky-Bucket-Einheit $LB_2$ sowohl die Dauer $t_{max}$ von peak-rate-bursts als auch die mittlere Bitrate $r_a$ überwacht wird, daß es alternativ aber auch möglich ist, nur die Dauer $t_{max}$ von peak-rate-bursts oder die mittlere Bitrate $r_a$ zu überwachen, wobei dann in Abweichung von der zeichnerischen Darstellung das ODER-Glied GO und die zu seinem einen oder seinem anderen Eingang führende Zählerschaltung ($Z_a$ mit $Z_R$; $Z_p$) entfällt.

**Patentansprüche**

1. Anordnung zur Bitratenüberwachung in ATM-Netzen in einem sog. Dual-Leaky-Bucket-Verfahren, demzufolge mittels einer ersten Leaky-Bucket-Einheit ($LB_1$) die Spitzenbitrate $r_p = B_z \cdot d_1/T_1$ (mit $B_z$ = Anzahl der Bits je ATM-Zelle, $d_1$ = Dekrementierungswert und $T_1$ = Dekrementierungsperiode der ersten Leaky-Bucket-Schaltung) überwacht und die bis zum Ansprechen der ersten Leaky-Bucket-Einheit ($LB_1$) maximal mögliche Anzahl $n_{max} = S_1 + k \cdot d_1$ (mit $k = 1 + \lceil (S_1-d_1)/((T_1/t_z)-d_1) \rceil$, $S_1$ = Ansprechschwellwert der ersten Leaky-Bucket-Einheit, $t_z$ = Dauer einer ATM-Zelle bei maximaler Übertragungsgeschwindigkeit) von ATM-Zellen in einem sog. full-rate-burst festgelegt wird bzw. mittels einer zweiten Leaky-Bucket-Einheit ($LB_2$) die mittlere Bitrate $r_a = B_z \cdot d_2/T_2$ (mit $d_2$ = Dekre-

mentierungswert und $T_2$ = Dekrementierungsperiode der zweiten Leaky-Bucket-Einheit) überwacht und die maximale Dauer $t_{max} \approx S_2 \cdot B_z/(r_p - r_a)$ eines sog. full-rate-bursts (mit $S_2$ = Ansprechschwellwert der zweiten Leaky-Bucket-Einheit) festgelegt wird,
**dadurch gekennzeichnet,**

daß in der zweiten Leaky-Bucket-Einheit ($LB_2$) bei dem mit den in der zweiten Leaky-Bucket-Einheit ($LB_2$) ankommenden ATM-Zellen inkrementierten und mit der Dekrementierungsperiode $T_2$ jeweils um den Dekrementierungswert $d_2$ dekrementierten, den Ansprechschwellwert $S_2$ aufweisenden Zähler ($Z_p$) ein kurz vor dem Ansprechschwellwert ($S_2$) liegender Rücksetzschwellwert ($S_R$) wirksam ist, bei dessen Unterschreiten der Zähler ($Z_p$) auf den Zählerstand O rückgesetzt wird, und
daß neben diesem ersten Zähler ($Z_p$) ein in seinem Zählerstand mit den in der zweiten Leaky-Bucket-Einheit ($LB_2$) ankommenden ATM-Zellen inkrementierter und mit einer füllungsgradabhängigen Zellentaktrate ($R_R$) jeweils um einen Zählschritt dekrementierter zusätzlicher Zähler ($Z_R$) vorgesehen ist, mit dessen Dekrementierung zugleich ein ebenfalls mit der Dekrementierungsperiode $T_2$ jeweils um den Dekrementierungswert $d_2$ dekrementierter weiterer Zähler ($Z_a$) inkrementiert wird, der einen kleineren Ansprechschwellwert $S_2^* < S_2$ als der erste Zähler ($Z_p$) aufweist, dessen Erreichen ebenso wie das Erreichen des Ansprechschwellwerts des ersten Zählers ($Z_p$) zu einer Eliminierung bzw. Markierung der überschießenden ATM-Zellen führt.

2. Anordnung nach Anspruch 1,
**dadurch gekennzeichnet,**
daß der maximale Zählerstand ($z_{Rmax}$) des zusätzlichen Zählers ($Z_R$) verbindungsindividuell nach Maßgabe der für die jeweilige Verbindung vorgegebenen Parameter festgelegt wird.

3. Anordnung nach Anspruch 2,
**dadurch gekennzeichnet,**
daß der maximale Zählerstand ($z_{Rmax}$) proportional zum Ansprechschwellwert ($S_2$) des ersten Zählers ($Z_p$) und zum Verhältnis der Spitzenbitrate ($r_p$) zu der mittleren Bitrate ($r_a$) festgelegt wird.

4. Anordnung nach einem der Ansprüche 1 bis 3,
**dadurch gekennzeichnet,**
daß die Zellentaktrate ($R_R$) bei kleinem Verhältnis von Zählerstand ($z_R$) zu maximalem Zählerstand ($z_{Rmax}$) des zusätzlichen Zählers ($Z_R$) der bei der mittleren Bitrate ($r_a$) gegebenen Zellrate entspricht.

5. Anordnung nach Anspruch 4,
**dadurch gekennzeichnet,**
daß die Zellentaktrate ($R_R$) bei zunehmendem Verhältnis ($z_R/z_{Rmax}$) von Zählerstand ($z_R$) zu maximalem Zählerstand ($z_{Rmax}$) des zusätzlichen Zählers ($Z_R$) über den Wert der bei der mittleren Bitrate ($r_a$) gegebenen Zellenrate schrittweise angehoben wird.

6. Anordnung nach Anspruch 4,
**dadurch gekennzeichnet,**
daß die Zellentaktrate ($R_R$) bei zunehmendem Verhältnis ($z_R/z_{Rmax}$) von Zählerstand ($z_R$) zu maximalem Zählerstand ($z_{Rmax}$) des zusätzlichen Zählers ($Z_R$) über den Wert der bei der mittleren Bitrate ($r_a$) gegebenen Zellenrate schrittweise angehoben wird, bis spätestens bei Erreichen des verbindungsindividuell eingestellten maximalen Zählerstands ($z_{Rmax}$) die Zellentaktrate ($R_R$) der bei der Spitzenbitrate ($r_p$) gegebenen Zellenrate entspricht.

7. Anordnung nach einem der vorhergehenden Ansprüche,
**dadurch gekennzeichnet,**
daß bei einem wiederholten Unterschreiten des bei dem ersten Zähler ($Z_p$) wirksamen Rücksetzschwellwertes ($S_R$) der Zähler ($Z_p$) lediglich auf einen höheren Zählerstand rückgesetzt wird.

8. Anordnung nach Anspruch 7,
**dadurch gekennzeichnet,**
daß bei mehrfach wiederholtem Unterschreiten des Rücksetzschwellwertes ($S_R$) der Zähler ($Z_p$) auf jeweils zunehmend höhere Zählerstände rückgesetzt wird.

9. Anordnung nach einem der Ansprüche 1 bis 8,
**dadurch gekennzeichnet,**

daß mittels der zweiten Leaky-Bucket-Einheit ($LB_2$) nur die maximale Dauer ($t_{max}$) von peak-rate-bursts oder die mittlere Bitrate ($r_a$) überwacht wird.

## Claims

1. Arrangement for monitoring the bit rate in ATM networks in a so-called dual leaky bucket method, according to which the peak bit rate $r_p = B_z \cdot d_1/T_1$ (where $B_z$ = the number of bits per ATM cell, $d_1$ = the decrementation value and $T_1$ = the decrementation period of the first leaky bucket circuit) is monitored by means of a first leaky bucket unit ($LB_1$) and the maximum possible number $n_{max} = S_1 + k \cdot d_1$ (where $k = 1 + \top(S_1 - d_1)/((T_1/t_z) - d_1) \perp$, $S_1$ = response threshold of the first leaky bucket unit, $t_z$ = duration of an ATM cell at the maximum transmission speed) of ATM cells is defined in a so-called full-rate burst and/or the average bit rate $r_a = B_z \cdot d_2/T_2$ (where $d_2$ = decrementation value and $T_2$ = decrementation period of the second leaky bucket unit) is monitored by means of a second leaky bucket unit ($LB_2$), and the maximum duration $t_{max} \approx S_2 \cdot B_z/(r_p - r_a)$ of a so-called full-rate burst (where $S_2$ = response threshold of the second leaky bucket unit) is defined, characterized in that in the second leaky bucket unit ($LB_2$) a reset threshold ($S_R$) which is just before the response threshold ($S_2$) is effective at the counter ($Z_p$) which is incremented with the ATM cells arriving in the second leaky bucket unit ($LB_2$), is decremented with the decrementation period $T_2$ in each case by the decrementation value $d_2$ and has the response threshold $S_2$, the counter ($Z_p$) being reset to the counter reading 0 when the value drops below the said reset threshold ($S_R$), and in that, in addition to this first counter ($Z_p$), an additional counter ($Z_R$) is provided, whose counter reading is incremented with the ATM cells arriving in the second leaky bucket unit ($LB_2$) and is decremented with a filling level-dependent cell clock rate ($R_R$), in each case by one counting increment, and whose decrementation coincides with the incrementation of a further counter ($Z_a$) which is likewise decremented with the decrementation period $T_2$, in each case by the decrementation value $d_2$, the said counter ($Z_a$) having a smaller response threshold $S_2^* < S_2$ than the first counter ($Z_p$), the reaching of which response threshold $S_2^* < S_2$, like the reaching of the response threshold of the first counter ($Z_p$), leads to the excess ATM cells being eliminated or marked.

2. Arrangement according to Claim 1, characterized in that the maximum counter reading ($z_{Rmax}$) of the additional counter ($Z_R$) is defined in a connection-specific fashion according to the parameters prescribed for the respective connection.

3. Arrangement according to Claim 2, characterized in that the maximum counter reading ($z_{Rmax}$) is defined proportionally to the response threshold ($S_2$) of the first counter ($Z_p$) and to the ratio of the peak bit rate ($r_p$) to the average bit rate ($r_a$).

4. Arrangement according to one of Claims 1 to 3, characterized in that the cell clock rate ($R_R$) in the case of a low ratio of the counter reading ($z_R$) to the maximum counter reading ($z_{Rmax}$) of the additional counter ($Z_R$) corresponds to the cell rate which is given at the average bit rate ($r_a$).

5. Arrangement according to Claim 4, characterized in that the cell clock rate ($R_R$) in the case of an increasing ratio ($Z_R/z_{Rmax}$) of the counter reading ($z_R$) to the maximum counter reading ($z_{Rmax}$) of the additional counter ($Z_R$) is raised incrementally above the value of the cell rate which is given at the average bit rate (ra).

6. Arrangement according to Claim 4, characterized in that the cell clock rate ($R_R$) in the case of an increasing ratio ($Z_R/z_{Rmax}$) of the counter reading ($Z_R$) to the maximum counter reading ($z_{Rmax}$) of the additional counter ($Z_R$) is raised incrementally above the value of the cell rate which is given at the average bit rate ($r_a$) until, at the latest when the maximum counter reading ($z_{Rmax}$), defined in a connection-specific fashion, is reached, the cell clock rate ($R_R$) corresponds to the cell rate given at the peak bit rate ($r_p$).

7. Arrangement according to one of the preceding claims, characterized in that, when the value again drops below the reset threshold ($S_R$) which is effective at the first counter ($Z_p$), the counter ($Z_p$) is merely reset to a higher counter reading.

8. Arrangement according to Claim 7, characterized in that, when the value repeatedly drops below the reset threshold ($S_R$), the counter ($Z_p$) is reset to respectively increasingly high counter readings.

9. Arrangement according to one of Claims 1 to 8, characterized in that only the maximum duration ($t_{max}$) of peak rate bursts or the average bit rate ($r_a$) is monitored by means of the second leaky bucket unit ($LB_2$).

**Revendications**

1. Dispositif de contrôle de débit binaire dans des réseaux ATM dans ce que l'on appelle un procédé Dual-Leaky-Bucket, selon lequel

   le débit binaire de pointe $r_p = B_z.d_1/T_1$ (avec $B_z$= nombre des bits par cellule ATM, $d_1$= valeur de décrémentation et $T_1$= période de décrémentation du premier circuit Leaky-Bucket) est contrôlé au moyen d'une première unité ($LB_1$) Leaky-Bucket et le nombre maximum possible, jusqu'à la réaction de la première unité ($LB_1$) Leaky-Bucket, $n_{max}= S_1 + k.d_1$ de cellules ATM (avec $k= 1 + \lceil (S_1-d_1)/((T_1/t_z)-d_1) \rceil$, $S_1$= valeur de seuil de réaction de la première unité Leaky-Bucket, $t_z$= durée d'une cellule ATM à vitesse maximum de transmission) est fixé dans ce que l'on appelle un full-rate-burst, et, au moyen d'une seconde unité ($LB_2$) Leaky-Bucket, le débit binaire moyen $r_a= B_z.d_2/T_2$ (avec $d_2$= valeur de décrémentation et $T_2$= période de décrémentation de la seconde unité Leaky-Bucket) est contrôlé et la durée maximum $t_{max} \approx S_2.B_z/(r_p-r_a)$ de ce que l'on appelle un full-rate-burst (avec $S_2$= valeur de seuil de la seconde unité Leaky-Bucket) est fixée,
   caractérisé en ce que

   dans la seconde unité ($LB_2$) Leaky-Bucket, dans le compteur ($Z_p$) incrémenté par les cellules ATM arrivant dans la seconde unité ($LB_2$) Leaky-Bucket, décrémenté par la valeur $d_2$ de décrémentation à la période $T_2$ de décrémentation et ayant la valeur $S_2$ de seuil de réaction, une valeur ($S_R$) de seuil de réinitialisation, qui se trouve peu avant la valeur ($S_2$) de seuil de réaction et par laquelle le compteur ($Z_p$) est réinitialisé à l'état O lors du passage sous elle, est active,
   il est prévu, outre ce premier compteur ($Z_p$), un compteur supplémentaire ($Z_R$), dont l'état est incrémenté par les cellules ATM arrivant dans la seconde unité ($LB_2$) Leaky-Bucket, qui est décrémenté d'un pas de comptage, à une cadence ($R_R$) de cellules dépendant du taux de remplissage et lors de la décrémentation duquel un compteur ($Z_a$) supplémentaire également décrémenté de la valeur $d_2$ de décrémentation à la période $T_2$ de décrémentation est incrémenté simultanément, le compteur supplémentaire ($Z_a$) ayant une valeur de seuil de réaction $S_2^*<S_2$ plus petite que celle du premier compteur ($Z_p$), l'atteinte de cette valeur $S_2^*$ de seuil de réaction de même que l'atteinte de la valeur de seuil de réaction du premier compteur ($Z_p$) provoquant une élimination ou un repérage des cellules ATM excédentaires.

2. Dispositif suivant la revendication 1,
   caractérisé en ce que
   l'état maximum ($z_{Rmax}$) du compteur supplémentaire ($Z_R$) est fixé pour chaque liaison en fonction des paramètres prescrits pour la liaison considérée.

3. Dispositif suivant la revendication 2,
   caractérisé en ce que
   l'état ($z_{Rmax}$) maximum du compteur est fixé proportionnellement à la valeur ($S_2$) de seuil de réaction du premier compteur ($Z_p$) et au rapport du débit binaire ($r_p$) de pointe au débit binaire moyen ($r_a$).

4. Dispositif suivant l'une des revendications 1 à 3,
   caractérisé en ce que
   la cadence ($R_R$) de cellule correspond, lorsque le rapport de l'état ($z_R$) de compteur à l'état ($z_{Rmax}$) maximum du compteur supplémentaire ($Z_R$) est petit, à la cadence de cellules donnée pour le débit binaire moyen ($r_a$).

5. Dispositif suivant la revendication 4,
   caractérisé en ce que
   la cadence ($R_R$) de cellules est élevée pas-à-pas au-dessus de la valeur de la cadence de cellules donnée pour le débit binaire moyen ($r_a$) lorsque le rapport ($z_R/z_{Rmax}$) de l'état ($z_R$) à l'état ($z_{Rmax}$) maximum du compteur supplémentaire ($Z_R$) augmente.

6. Dispositif suivant la revendication 4,
   caractérisé en ce que
   la cadence ($R_R$) de cellules est élevée pas-à-pas au-dessus de la valeur de la cadence de cellules donnée pour le débit binaire moyen ($r_a$), lorsque le rapport ($z_R/z_{Rmax}$) de l'état ($z_R$) à l'état ($z_{Rmax}$) maximum du compteur supplémentaire ($Z_R$) augmente, jusqu'à ce que la cadence ($R_R$) de cellules corresponde à la cadence de cellules donnée pour le débit binaire ($r_p$) de pointe au plus tard lorsque l'état ($z_{Rmax}$) maximum réglé pour chaque liaison est atteint.

7. Dispositif suivant l'une des revendications précédentes,
caractérisé en ce que
en cas de répétition du passage sous la valeur ($S_R$) de seuil de réinitialisation actif pour le premier compteur ($Z_p$),
le compteur ($Z_p$) n'est réinitialisé qu'à un état de comptage plus grand.

8. Dispositif suivant la revendication 7,
caractérisé en ce que
en cas de répétition à plusieurs reprises du passage sous la valeur ($S_R$) de seuil de réinitialisation, le compteur
($Z_p$) est réinitialisé à des états de comptage de plus en plus grands.

9. Dispositif suivant l'une des revendications 1 à 8,
caractérisé en ce que
seule la durée maximum ($t_{max}$) de peak-rate-bursts ou le débit binaire moyen ($r_a$) est contrôlé au moyen de la
seconde unité ($LB_2$) Leaky-Bucket.